(19) **Europäisches Patentamt / European Patent Office / Office européen des brevets**

(11) **EP 1 760 295 B1**

(12) **FASCICULE DE BREVET EUROPEEN**

(45) Date de publication et mention
de la délivrance du brevet:
**26.12.2018 Bulletin 2018/52**

(51) Int Cl.:
*F02D 41/00* (2006.01)     *F02D 41/40* (2006.01)
*F02D 35/02* (2006.01)     *F02D 41/30* (2006.01)
*F02D 41/14* (2006.01)     *F02D 41/24* (2006.01)

(21) Numéro de dépôt: **06300869.2**

(22) Date de dépôt: **09.08.2006**

(54) **Système de contrôle du fonctionnement d'un moteur diesel de véhicule automobile équipe de moyens de recirculation de gaz d'échappement**

Regelvorrichtung für eine Diesel-Brennkraftmaschine mit Abgasrückführung

Control system for a diesel engine equipped with exhaust recriculation means

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **30.08.2005 FR 0508881**

(43) Date de publication de la demande:
**07.03.2007 Bulletin 2007/10**

(73) Titulaire: **PEUGEOT CITROËN AUTOMOBILES
S.A.
78140 Velizy Villacoublay (FR)**

(72) Inventeurs:
• **Gimbres, David
94510, La Queue en Brie (FR)**

• **Chemisky, Jean-Pierre
92400, Courbevoie (FR)**
• **Vermonet, Claire
59000, Lille (FR)**
• **Chaouche, Ali
75018, Paris (FR)**

(74) Mandataire: **Fernandez, Francis Lionel et al
PSA Automobiles SA
VEIP - VV1400
Route de Gisy
78140 Velizy Villacoublay (FR)**

(56) Documents cités:
WO-A-2006/013058     AT-U1- 6 753
DE-A1- 10 319 333     FR-A- 2 835 881
FR-A- 2 854 656       FR-A- 2 857 410

**Description**

La présente invention concerne un système de contrôle du fonctionnement d'un moteur Diesel de véhicule automobile équipé de moyens de recirculation des gaz d'échappement en entrée de celui-ci.

Plus particulièrement, la présente invention concerne un système du type susmentionné comprenant des moyens de commande des moyens de recirculation et des moyens de détermination d'un niveau de bruit de combustion dans le moteur.

On connaît dans l'état de la technique des systèmes de contrôle du fonctionnement du moteur visant à minimiser le bruit de combustion perçu par le conducteur du véhicule.

De manière typique, ces systèmes déterminent un index de bruit de combustion en fonction de la pression dans les cylindres du moteur, par exemple un index IEPC pour « Index d'Energie de Pression de Combustion », et modifient des paramètres de l'injection de carburant dans les cylindres pour minimiser cet index et donc le bruit de combustion. Par exemple, dans les moteurs Diesel à injection classique, la réduction du bruit de combustion est assurée par des injections précoces de carburant dans les cylindres, ou injections pilotes.

Parallèlement à la recherche par les motoristes de la minimisation du bruit de combustion, les normes anti-pollution sont de plus en plus sévères, et il devient difficile à la fois de minimiser le bruit de combustion en modifiant l'injection de carburant dans le cylindre et d'assurer le niveau d'émission de polluants requis.

Par exemple, afin de satisfaire les normes anti-pollution, de nouveaux types de moteurs Diesel sont mis au point, tels que des moteurs à combustion homogène (HCCI) ou partiellement homogène (P/HCCI), par exemple décrits dans la demande de brevet FR 2 835 881. Or, pour de tels moteurs, le bruit de combustion est élevé et l'utilisation d'injections pilotes ne suffit plus pour minimiser le bruit de combustion de manière satisfaisante.

Le document AT-A-6 753 U1 décrit un système de contrôle du fonctionnement d'un moteur Diesel dans lequel un pilotage des moyens de recirculation des gaz d'échappement en fonction du niveau de bruit de combustion est utilisé.

Le but de l'invention est de résoudre le problème susmentionné en proposant un système de contrôle du fonctionnement de moteur apte à minimiser le bruit de combustion sans modifier les caractéristiques de l'injection de carburant dans les cylindres du moteur.

A cet effet, l'invention a pour objet un système de contrôle du fonctionnement d'un moteur Diesel de véhicule automobile équipé de moyens d'alimentation en carburant des cylindres de celui-ci selon des injections multiples et de moyens de recirculation des gaz d'échappement en entrée du moteur, ledit système comprenant une chaîne d'acquisition de la pression dans au moins un cylindre du moteur et de l'angle moteur, des moyens de commande des moyens de recirculation et des moyens de détermination d'un niveau de bruit de combustion dans le moteur, les moyens de détermination du niveau de bruit de combustion dans le moteur étant adaptés pour déterminer celui-ci en fonction du maximum des augmentations du gradient de pression dans le au moins un cylindre provoquées par les injections multiples de carburant dans celui-ci, et les moyens de commande étant adaptés pour piloter les moyens de recirculation en fonction du niveau de bruit de combustion dans le moteur déterminé, caractérisé en ce que les moyens de détermination sont propres à déterminer le niveau de bruit de combustion dans le moteur en fonction d'un niveau de bruit de combustion dans le au moins un cylindre selon la relation :

$$ \text{nbc}_i = \max_{j \in \{1,2...,N\}} \left( \max_{\alpha_i \in B_j} \left( \frac{dP_i}{d\alpha_i} \right) - \frac{dP_i}{d\alpha_i} \left( \text{ini}_j \right) \right) $$

où $\text{nbc}_i$ est le niveau de bruit de combustion dans le au moins un cylindre, N est le nombre d'injections multiples de carburant dans le cylindre, $B_j$ est une plage prédéterminée d'angles vilebrequin du cylindre comprenant le maximum du

$$ \frac{dP_i}{d\alpha_i} \left( \text{ini}_j \right) $$

gradient de pression provoqué par la $j^{\text{ème}}$ injection de carburant dans le cylindre, et                         est la valeur du gradient de pression dans le au moins un cylindre à l'angle vilebrequin de début de combustion du carburant de la $j^{\text{ème}}$ injection.

Suivant des modes particuliers de réalisation, le système comporte une ou plusieurs des caractéristiques suivantes :

- les moyens de détermination sont propres à déterminer le niveau de bruit de combustion dans le moteur comme étant le maximum des niveaux de bruit de combustion dans le au moins un cylindre ;
- les moyens de détermination sont propres à déterminer le niveau de bruit de combustion dans le moteur comme étant une combinaison linéaire des niveaux de bruit de combustion dans le au moins un cylindre ;

- les moyens de détermination sont propres à déterminer le niveau de bruit de combustion dans le moteur comme étant la moyenne des niveaux de bruit de combustion dans le au moins un cylindre ;
- les moyens de recirculation comprennent des moyens de réglage du débit des gaz d'échappement recirculés en entrée du moteur, et les moyens de commande comprennent des moyens de pilotage des moyens de réglage du débit en fonction du niveau de bruit de combustion déterminé ;
- les moyens de recirculation comprennent des moyens de réglage de la température des gaz d'échappement recirculés en entrée du moteur, et les moyens de commande comprennent des moyens de pilotage des moyens de réglage de la température en fonction du niveau de bruit de combustion déterminé ;
- les moyens de commande comprennent des moyens formant cartographie de valeurs nominales prédéterminées du niveau de bruit de combustion en fonction de points de fonctionnement prédéterminés du moteur, et des moyens de pilotage adaptés pour délivrer aux moyens de recirculation un signal de régulation propre à réguler, pour un point de fonctionnement du moteur de la cartographie, le niveau de bruit de combustion sur la valeur du niveau de bruit de combustion de la cartographie associée à ce point de fonctionnement ;
- les moyens de commande comprennent des moyens de correction des moyens de pilotage adaptés pour déterminer le signal de régulation, et corriger les moyens de pilotage en fonction de celui-ci, à partir d'une première stratégie selon les relations :

$$U^* = \underset{U \in Q, \alpha \in A}{\arg\min} \left( nbc(U) \right)$$

sous la contrainte :

$$\max\left(\frac{dP}{d\alpha}\right)_{nom} - T_{min} \leq nbc(U) \leq \max\left(\frac{dP}{d\alpha}\right)_{nom} + T_{max}$$

où U* est le signal de régulation, U est un vecteur de paramètres de fonctionnement des moyens de recirculation,

$$\max\left(\frac{dP}{d\alpha}\right)_{nom}$$

Q est un ensemble prédéterminé de valeurs pour les paramètres U, $\qquad$ est une valeur nominale du niveau de bruit de combustion, et $T_{min}$ et $T_{max}$ sont des tolérances prédéterminées positives ;
- les moyens de correction sont adaptés, lorsque la première stratégie échoue, pour déterminer le signal de régulation, et corriger les moyens de pilotage en fonction de celui-ci, à partir d'une seconde stratégie selon les relations :

$$U^* = \underset{U \in Q, \alpha \in A}{\arg\min} \left( \left| nbc(U) - \max\left(\frac{dP}{d\alpha}\right)_{nom} \right| \right)$$

sous la contrainte :

$$nbc(U) \leq \max\left(\frac{dP}{d\alpha}\right)_{nom}$$

- l'ensemble Q est un ensemble prédéterminé de valeurs des paramètres de fonctionnement des moyens de recirculation satisfaisant à des contraintes prédéterminées sur l'émission de polluant par le moteur ; et
- le moteur est du type à homogénéisation partielle ou totale du mélange carburant-gaz admis dans les cylindres du moteur.

L'invention sera mieux comprise à la lecture de la description qui va suivre, donnée uniquement à titre d'exemple, et faite en relation avec les dessins annexés, dans lesquels :

- la figure 1 est une vue schématique d'un système de contrôle conforme à l'invention associé à un moteur Diesel de véhicule automobile ;
- la figure 2 est une vue schématique de l'unité de contrôle entrant dans la constitution du système de la figure 1 ;
- les figures 3 et 4 sont des graphiques illustrant la variation du gradient de pression dans un cylindre alimenté selon une injection pilote et une injection principale pour un premier et un second modes de fonctionnement du moteur respectivement ; et

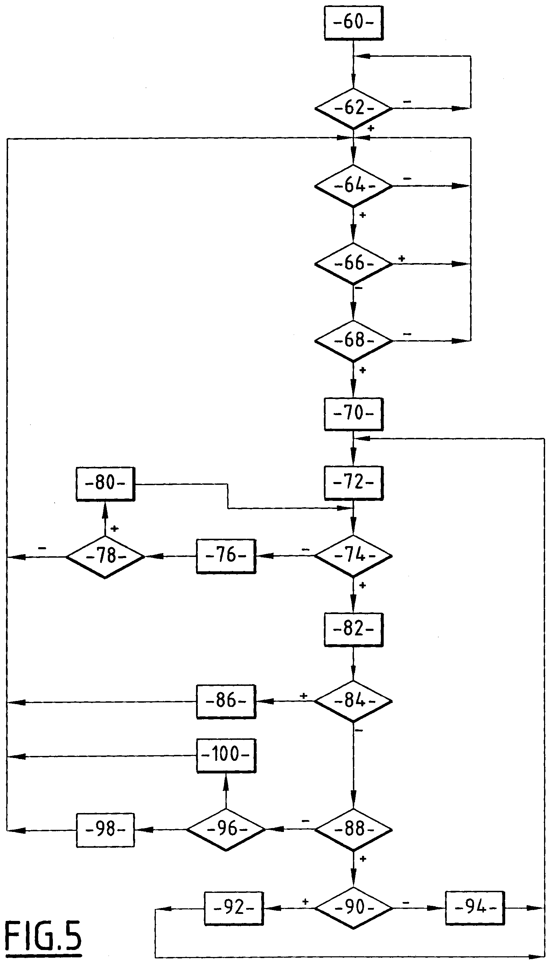

- la figure 5 est un organigramme d'un fonctionnement de l'unité de contrôle de la figure 2 illustrant la minimisation du bruit de combustion en fonction à la fois du débit et de la température des gaz d'échappement recirculés en entrée du moteur.

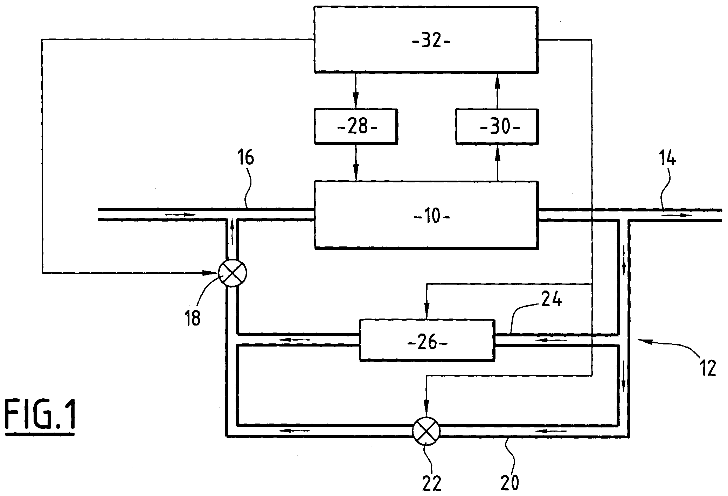

Sur la figure 1, un moteur Diesel 10, par exemple un moteur à combustion homogène (HCCI) ou partiellement homogène (P/HCCI), est équipé d'une boucle de recirculation 12 de gaz d'échappement en entrée de celui-ci, ou boucle EGR pour « Exhaust Gaz Recirculation ».

La boucle de recirculation 12 prélève des gaz d'échappement d'une conduite d'échappement 14 agencée en sortie du moteur 10 et alimente des moyens 16 d'admission d'un mélange air/gaz d'échappement en entrée du moteur 10.

Cette boucle EGR 12 comprend une vanne EGR 18 pour régler le débit des gaz d'échappement recirculés en entrée du moteur 10, et une première branche de recirculation 20 des gaz d'échappement agencée en amont de la vanne EGR 18, classiquement désignée par le terme « bypass ». Cette branche 20 comprend une vanne 22 proportionnelle, ou en variante une vanne tout-ou-rien, pour moduler le débit des gaz la traversant.

La boucle EGR 12 comprend également une seconde branche 24, en amont de la vanne EGR 18, comportant un échangeur thermique 26 pour refroidir les gaz d'échappement circulant dans celui-ci, par exemple un échangeur air/air ou air/eau, et délivrant les gaz refroidis à l'entrée de la vanne EGR 18.

Les vannes EGR 18 et 22 sont commandables, et plus particulièrement leurs pourcentages d'ouverture, et constituent respectivement des actionneurs propres à régler le débit et la température des gaz recirculés en entrée du moteur 10.

Le moteur 10 est par ailleurs associé à des moyens 28 d'alimentation en carburant des cylindres de celui-ci, comme par exemple des moyens à rampe commune d'alimentation. Les moyens 28 d'alimentation sont adaptés pour alimenter les cylindres du moteur 10 selon des injections multiples de carburant, par exemple selon au moins une injection pilote et une injection principale, en fonction du régime de rotation du moteur et du couple demandé par le conducteur du véhicule, comme cela est connu en soi dans l'état de la technique.

Le moteur 10 est également associé à une chaîne d'acquisition 30 de paramètres de fonctionnement de celui-ci, comprenant notamment un ou plusieurs capteurs de pression cylindre, implantés ou non dans la culasse, un capteur du régime moteur, un capteur du couple demandé par le conducteur et un capteur d'angle de l'arbre moteur, ces capteurs étant connus en soi dans l'état de la technique.

Le moteur 10 et l'ensemble des organes 18, 22, 26, 28 qui viennent d'être décrits sont commandés par une unité de contrôle 32 connectée à la chaîne d'acquisition 30 et propre à commander la vanne EGR 18 et la vanne 22 du bypass 20 pour régler le débit et la température des gaz d'échappement recirculés en entrée du moteur 10 en fonction des mesures qu'elle reçoit afin de minimiser le bruit de combustion du moteur 10, comme cela sera expliqué plus en détail par la suite.

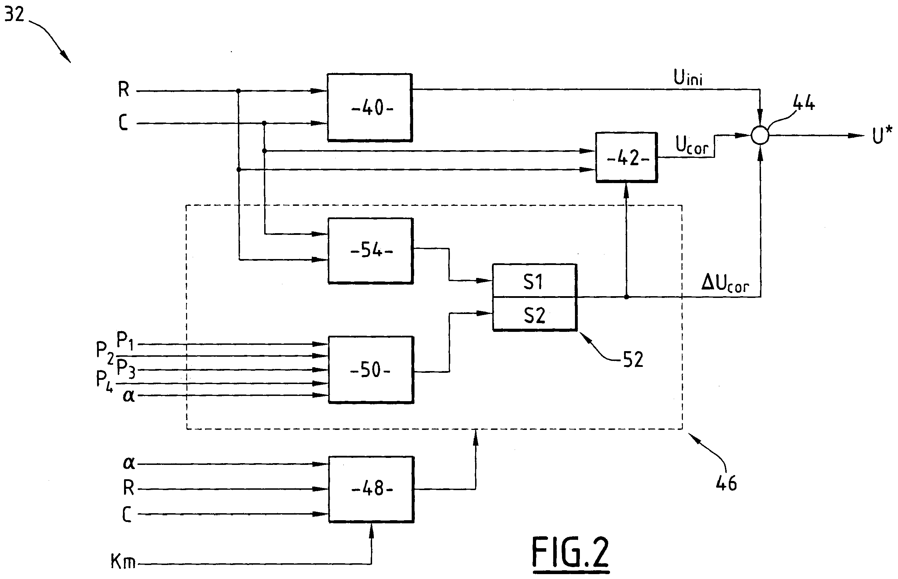

En se référant à la figure 2, qui est une vue schématique de l'unité de contrôle 32, cette dernière comprend des premiers moyens 40 formant cartographie mémorisant des valeurs prédéterminées de signal de pilotage $U_{ini}$ de la boucle EGR 12, ici des pourcentages d'ouverture des vannes 18 et 22, représentatives de débits DEGR et de températures TEGR des gaz recirculés en entrée du moteur 10. Les moyens 40 mémorisent également des valeurs prédéterminées de paramètres de fonctionnement du moteur, notamment son régime R et le couple C qui lui est demandé par le conducteur, chacune associée à une valeur de signal de pilotage mémorisée.

Les moyens 40 formant cartographie, par exemple une table de correspondance ayant pour entrée les valeurs du régime R et du couple C et en sortie les valeurs du signal de pilotage $U_{ini}$, sont connectés à la chaîne d'acquisition 30 pour recevoir les mesures du régime R du moteur et du couple C demandé, et délivrent en réponse aux mesures de régime et de couple reçues, un signal $U_{ini}$ de pilotage de la boucle 12 de recirculation correspondant.

Les valeurs mémorisées dans les moyens 40 sont par exemple déterminées en sortie d'usine lors d'une campagne de test par un jury d'experts afin de minimiser le bruit de combustion d'un moteur Diesel particulier utilisé lors de cette campagne de test, tout en prenant en compte le compromis bruit / émissions.

Du fait de la dispersion des caractéristiques de fonctionnement des moteurs, y compris parmi ceux appartenant à la même famille, et/ou des caractéristiques de vieillissement et d'usure du moteur 10, de la boucle de recirculation 12, et des moyens 28 d'alimentation, les valeurs de signal de pilotage $U_{ini}$ mémorisées dans les moyens 40 sont non optimales pour le moteur 10, parfois dès la sortie d'usine de celui-ci, ou le deviennent au fil du temps.

L'unité de contrôle 32 comprend des seconds moyens 42 formant cartographie de correction, par exemple structurellement analogues aux moyens 40, mémorisant des valeurs de correction $U_{cor}$ des valeurs de signal de pilotage

$U_{ini}$ mémorisées dans les premiers moyens 40 formant cartographie en fonction des mêmes valeurs de régime R et de couple C.

Les moyens 42 formant cartographie de correction sont également connectés à la chaîne d'acquisition 30 pour recevoir les mesures du régime R et du couple C demandé et délivrent en réponse la valeur de correction correspondante $U_{cor}$ à un sommateur 44.

Ce sommateur 44 reçoit également la sortie des moyens 40 formant cartographie, réalise la somme U* de celle-ci avec la sortie des moyens 42 formant cartographie de correction, et délivre cette somme U* à la boucle EGR 12 en tant que signal de pilotage de celle-ci afin de régler le débit DEGR et la température TEGR des gaz recirculés en entrée du moteur 10.

Les valeurs de correction $U_{cor}$, initialement nulles à la mise en service du moteur 10, sont déterminées tout au long de la vie du moteur 10 pour corriger les dérives dans le fonctionnement du moteur 10 et des organes qui lui sont associés, responsables de la dégradation du bruit de combustion.

Plus particulièrement, la cartographie de correction des moyens 42 est mise à jour régulièrement et/ou périodiquement par des moyens 46 de correction. Ces moyens 46 sont propres à corriger les valeurs $U_{cor}$ de la cartographie de correction afin que le signal U* de pilotage de la boucle EGR 12 de recirculation soit optimal vis-à-vis du bruit de combustion tout au long du cycle de vie du moteur.

Le déclenchement de la mise à jour des moyens 42 est réalisé par des moyens 48 d'activation/désactivation propres à activer la correction des moyens 42 en fonction de conditions prédéterminées d'activation, et désactiver cette correction lorsque les moyens 42 ont été mis à jour.

Par exemple, les moyens 48 reçoivent le kilométrage km du véhicule de moyens appropriés et sont propres à activer la correction des moyens 42 lorsque le véhicule a parcouru un nombre prédéterminé de kilomètres depuis la dernière correction, et/ou les moyens 48 activent la correction à intervalles de temps réguliers, par exemple tous les X jours, où X est un nombre prédéterminé.

Par ailleurs, les moyens 40 et 42 formant cartographie mémorisant des valeurs de signal de pilotage $U_{ini}$, $U_{cor}$ en fonction de couples (R,C) prédéterminés de régime et de couple, la correction des moyens 42 est réalisée lorsque les mesures du régime R du moteur et du couple C demandé sont égales à l'un des couples (R,C) mémorisé. A cet effet, les moyens 48 sont connectés à la chaîne d'acquisition 30 pour recevoir ces mesures et les comparer aux couples (R,C) mémorisés dans les moyens 40, 42 et activent les moyens 46 de correction si le couple de mesures est égal à l'un de ces couples mémorisés puis stabilisé autour de ce couple, comme cela sera expliqué plus en détail par la suite.

Les moyens 46 de correction comprennent des moyens 50 de calcul connectés à la chaîne d'acquisition 30 pour recevoir les mesures P1, P2, P3, P4 de pression dans les cylindres du moteur 10, par exemple au nombre de 4, et la mesure $\alpha$ de l'angle de l'arbre moteur.

Les moyens 50 sont propres à calculer en fonction de ces mesures un niveau de bruit de combustion dans chaque cylindre, par exemple selon la relation :

$$nbc_i = \max_{\alpha_i \in A} \frac{dP_i}{d\alpha_i}$$

où $nbc_i$ est un niveau de bruit représentatif du bruit généré par la combustion dans le ième cylindre, $P_i$ est la pression mesurée dans le ième cylindre, $\alpha_i$ est l'angle vilebrequin de ce ième cylindre déterminé par les moyens 46 à partir de l'angle moteur $\alpha$, comme cela est connu en soi, et A est une plage prédéterminée d'angles vilebrequin, par exemple une plage de la phase de combustion du cylindre, correspondant à [0 ;90] degrés vilebrequin après le point mort haut du cycle du cylindre.

Dans un autre mode de réalisation du système selon l'invention, les moyens 50 sont propres à déterminer le niveau de bruit de combustion dans le moteur 10 en fonction du maximum des augmentations du gradient de pression dans le au moins un cylindre provoquées par les injections multiples de carburant dans celui-ci.

Plus particulièrement, les moyens 50 sont adaptés pour calculer, en fonction des mesures P1, P2, P3, P4 de pression dans les cylindres, un niveau de bruit de combustion $nbc_i$ dans chaque cylindre selon la relation :

$$nbc_i = \max_{j \in \{1,2...,N\}} \left( \max_{\alpha_i \in B_j} \left( \frac{dP_i}{d\alpha_i} \right) - \frac{dP_i}{d\alpha_i} (ini_j) \right)$$

où N est le nombre d'injections multiples de carburant dans le cylindre, $B_j$ est une plage prédéterminée d'angles vilebrequin du cylindre comprenant le maximum du gradient de pression provoqué par la $j^{\text{ème}}$ injection de carburant dans le cylindre,

$$\frac{dP_i}{d\alpha_i}\left(ini_j\right)$$

et est la valeur du gradient de pression dans le cylindre à l'angle vilebrequin de début de combustion du carburant de la $j^{\text{ème}}$ injection, cet angle étant par exemple délivré par le contrôle de l'injection du moteur. Le terme

$$\max_{\alpha_i \in B_j}\left(\frac{dP_i}{d\alpha_i}\right) - \frac{dP_i}{d\alpha_i}\left(ini_j\right)$$

est donc l'amplitude de l'auto-inflammation du carburant de la $j^{\text{ème}}$ injection.

Chacune des plages $B_j$ est déterminée préalablement ou est par exemple égale à la plage séparant l'angle de début de la $j^{\text{ème}}$ injection de l'angle de début de la $(j+1)^{\text{ème}}$ injection.

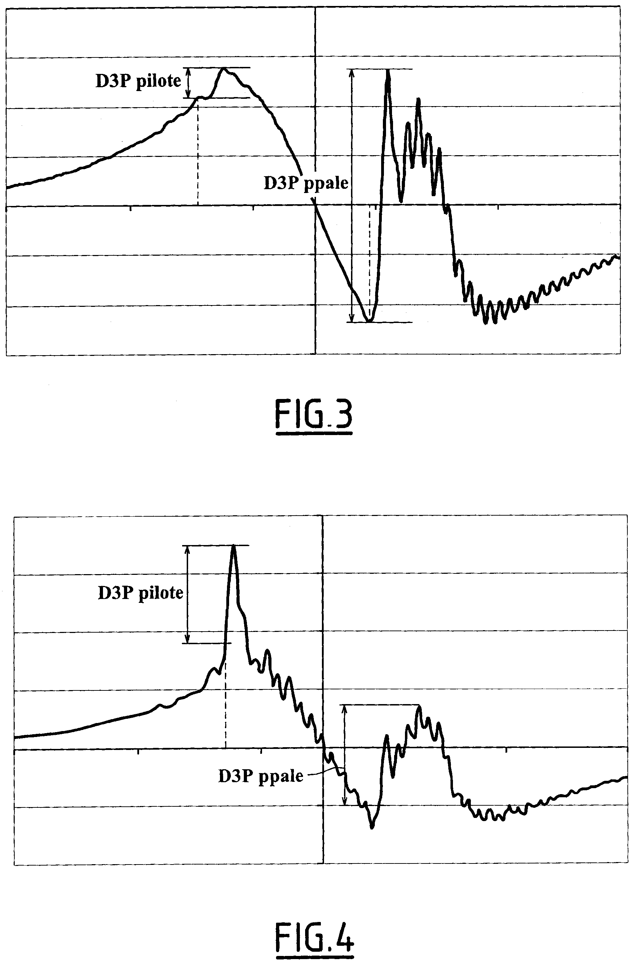

Le calcul du niveau de bruit combustion $nbc_i$ selon la relation précédente est illustré sur les graphiques des figures 3 et 4. Les figures 3 et 4 sont des courbes de variation du gradient de pression dans la chambre de combustion d'un cylindre alimenté en carburant selon une injection pilote et une injection principale pour un premier et un second modes de fonctionnement différents du moteur, ces variations du gradient de pression étant tracées dans une plage d'angles vilebrequin comprenant les phases de compression et de combustion du cycle du cylindre.

Comme on peut le constater sur la figure 3, dans le premier mode de fonctionnement du moteur, l'augmentation D3P pilote du gradient de pression provoquée par l'injection pilote est inférieure à l'augmentation D3Pppale du gradient de pression provoquée par l'injection principale. Le bruit de combustion $nbc_i$ dans le cylindre est alors égal à l'augmentation D3Pppale.

Dans le mode de fonctionnement du moteur associé à la figure 4, le cas inverse se présente. Le bruit de combustion $nbc_i$ dans le cylindre est donc égal à l'augmentation D3Ppilote.

Les moyens 50 calculent alors un niveau de bruit de combustion dans le moteur 10 en fonction des niveaux de bruit de combustion $nbc_i$ dans les cylindres par exemple selon la relation :

$$nbc = \max_i nbc_i \quad (1)$$

En variante, les moyens 50 calculent le niveau de bruit de combustion nbc dans le moteur 10 comme une combinaison linéaire des niveaux de bruit de combustion $nbc_i$ dans les cylindres, c'est-à-dire un niveau de bruit nbc selon la relation :

$$nbc = \sum_{i=1}^{M} \alpha_i \times nbc_i$$

où M est le nombre de cylindres, et $\alpha_i$, i=1, ..., N, sont des coefficients prédéterminés.

En variante les moyens 50 calculent le niveau de bruit de combustion dans le moteur 10 comme la moyenne des niveaux de bruit de combustion $nbc_i$ dans les cylindres.

En variante, les moyens 50 calculent le niveau de bruit de combustion dans le moteur selon la relation :

$$nbc = f(g(nbc_1, \cdots, nbc_M))$$

où g est le maximum, ou une combinaison linéaire, ou la moyenne des niveaux de bruit $nbc_i$ et f une fonction bijective décroissante prédéterminée.

En variante, le système selon l'invention est propre à calculer le niveau de bruit de combustion dans le moteur en fonction du niveau de bruit de combustion d'un nombre quelconque de cylindres, par exemple un seul cylindre.

Le calcul du gradient de pression $\dfrac{dP_i}{d\alpha_i}$ dans un cylindre est réalisé par exemple en échantillonnant le signal de mesure de la pression $P_i$, délivré par un capteur dont la mesure est analogique, avec un pas d'échantillonnage $\Delta\alpha$ d'angle vilebrequin prédéterminé et en calculant le gradient de pression selon la relation

$$\frac{dP_i}{d\alpha_i}(k) = \frac{P_i(k \times \Delta\alpha) - P((k-1) \times \Delta\alpha)}{\Delta\alpha}$$

où k est le kième angle d'échantillonnage.

Les moyens 46 de correction comprennent également des moyens 52 d'optimisation mettant en oeuvre une stratégie de recherche prédéterminée de la valeur optimale U* du signal de pilotage de la boucle 12 de recirculation, c'est-à-dire des moyens 52 propres à mettre à jour les valeurs de correction $U_{cor}$ des moyens 42 formant cartographie telles que la somme $U_{ini}+U_{cor}$ est optimale vis-à-vis du bruit de combustion dans le moteur.

Plus particulièrement, ces moyens 52 d'optimisation sont propres à recevoir le niveau de bruit nbc calculé par

$$\max\left(\frac{dP}{d\alpha}\right)_{nom}$$

les moyens 50 ainsi qu'une valeur nominale prédéterminée de niveau de bruit de combustion pour le couple (R,C) correspondant. Cette valeur nominale est délivrée par des moyens 54 formant cartographie mémorisant des valeurs de niveau de bruit nominal prédéterminées en fonction des mêmes valeurs de régime et de couple que les moyens 40 et 42 formant cartographie.

Ces moyens 54 sont connectés à la chaîne d'acquisition 30 pour recevoir la mesure du régime R et la mesure

$$\max\left(\frac{dP}{d\alpha}\right)_{nom}$$

du couple C demandé et délivrer en fonction de celles-ci la valeur nominale du niveau de bruit correspondante.

Les valeurs nominales de niveau de bruit mémorisées dans les moyens 54 sont par exemple déterminées lors de la campagne de test en fonction de plusieurs critères.

Il est connu que les gradients de pression dans les cylindres d'un moteur Diesel doivent être compris dans des plages de fonctionnement prédéterminées afin que la combustion dans les cylindres se déroule de manière satisfaisante, à la fois tant du point de vue du rendement énergétique que de l'émission de polluants. D'autre part, le bruit de combustion est intimement lié à de tels gradients de pression. Ainsi, les valeurs nominales sont par exemple déterminées pour satisfaire un compromis entre le bruit de combustion perçu par le conducteur du véhicule et les quantités de polluants émises par le moteur 10.

Les moyens 52 d'optimisation sont propres à mettre en oeuvre une stratégie de recherche du signal optimal U* qui, lorsqu'il est appliqué à la boucle 12 de recirculation, a pour effet de rendre sensiblement égal le niveau de bruit

$$\max\left(\frac{dP}{d\alpha}\right)_{nom}$$

nbc calculé par les moyens 50 à la valeur nominale du niveau de bruit reçue des moyens 54.

Plus particulièrement, la dégradation du bruit de combustion dans le moteur se traduisant par une augmentation du niveau de bruit selon la relation (1), les moyens 52 sont propres à mettre en oeuvre une stratégie de recherche S1 selon les relations :

$$U^* = \underset{U \in Q, \alpha \in A}{\arg\min}\left(nbc(U)\right) \quad (3)$$

sous la contrainte :

$$\max\left(\frac{dP}{d\alpha}\right)_{nom} - T_{min} \leq nbc(U) \leq \max\left(\frac{dP}{d\alpha}\right)_{nom} + T_{max} \quad (4)$$

où U est le vecteur des paramètres de fonctionnement de la boucle EGR, c'est-à-dire ici les pourcentages d'ouverture des vannes 18 et 22 réglant le débit et la température des gaz recirculés en entrée du moteur 10, Q est un ensemble prédéterminé pour ces paramètres, et $T_{min}$ et $T_{max}$ sont des tolérances prédéterminées positives, par exemple égales à 0,1 bar/ degré vilebrequin.

A cet effet, les moyens 52 d'optimisation sont adaptés pour déterminer et délivrer des valeurs $\Delta U_{cor}$ correctives au sommateur 44 telles que la somme $U_{ini} + U_{cor} + \Delta U_{cor}$ est propre à parcourir l'ensemble Q et à sélectionner une valeur $\Delta U_{cor}$ telle que la somme $U_{ini} + U_{cor} + \Delta U_{cor}$ satisfait la relation (4).

Cette valeur sélectionnée est alors délivrée aux moyens 42 formant cartographie de correction pour la mise à jour de la valeur de correction correspondante en remplaçant la valeur courante $U_{cor}$ par la nouvelle valeur $U_{cor} + \Delta U_{cor}$. Ainsi, pour chaque couple de régime et de couple (R,C) des moyens 42, 44 formant cartographie, le niveau de bruit de combustion est régulé sur la valeur nominale associée à ce couple, le signal $U_{cor} + \Delta U_{cor}$ consistant de ce fait en un signal de régulation du niveau de bruit de combustion sur la valeur nominale.

De manière avantageuse, l'ensemble Q est un ensemble dont les valeurs satisfont à des contraintes prédéterminées sur l'émission de polluants.

Par exemple, on sait qu'un débit EGR trop élevé a pour effet d'augmenter l'émission d'hydrocarbures imbrûlés par le moteur, tels que du HC ou du CH et des particules de suie. Ainsi, les moyens 54 formant cartographie sont par exemple également adaptés pour délivrer aux moyens 52 d'optimisation une plage d'ouverture de vanne EGR 18 et une plage d'ouverture de la vanne 22 de la branche 20 de la boucle EGR 12 en fonction des mesures du régime moteur R et du couple C demandé.

Ces plages sont déterminées par exemple expérimentalement et correspondent à des débits EGR et températures EGR dont les valeurs satisfont aux critères en vigueur sur les émissions de polluants.

Si la résolution du problème d'optimisation décrit ci-dessus échoue, c'est-à-dire si les moyens 52 d'optimisation échouent à trouver une valeur $\Delta U_{cor}$ corrective satisfaisant la relation (4), les moyens 52 sont alors propres à mettre en oeuvre une seconde stratégie S2 de recherche selon la relation :

$$U^* = \underset{U \in Q, \alpha \in A}{\arg\min}\left(\left|nbc(U) - \max\left(\frac{dP}{d\alpha}\right)_{nom}\right|\right) \quad (5)$$

sous la contrainte

$$nbc(U) \leq \max\left(\frac{dP}{d\alpha}\right)_{nom} \quad (6)$$

L'application de cette seconde stratégie 52 permet de régler le bruit de combustion à un niveau acceptable (grâce à la contrainte (6)) et cela même si la régulation du niveau de bruit selon la première stratégie S1 diverge.

Il va maintenant être décrit en relation avec la figure 3 un mode de réalisation d'un fonctionnement du système de contrôle venant d'être décrit.

Après le démarrage du moteur en 60, une étape 62 de scrutation des conditions de déclenchement de la correction des moyens 42 formant cartographie est mise en oeuvre par les moyens 48 d'activation/désactivation. Si le nombre de kilomètres parcourus par le véhicule depuis la dernière mise à jour des moyens 42 formant cartographie de correction est supérieure à un kilométrage seuil prédéterminé et/ou que la période de temps depuis cette dernière mise à jour est supérieure à une durée seuil prédéterminée, les moyens 48 activent les moyens 46 de correction.

Dans étape 64 suivante, les moyens 48 scrutent si le couple de mesures de régime R et de couple C est égal à un couple de valeurs de régime et de couple des cartographies des moyens 40 et 42.

Si tel est le cas, une étape 66 suivante, par exemple mise en oeuvre par les moyens 48, consiste à tester si la cartographie des moyens 42 a déjà été mise à jour pour ce couple. Si le résultat de ce test est positif, l'étape 66 boucle sur l'étape 64 pour la détection d'un nouveau point de passage. Si toutes les valeurs de la cartographie de correction des moyens 42 ont été mises à jour, la correction des moyens 42 est désactivée et le moteur reprend son fonctionnement normal.

Sinon, l'étape 68 suivante, par exemple mise en oeuvre par les moyens 48, consiste à tester si le point de fonctionnement (R,C) du moteur est stable autour de ce couple des cartographies des moyens 40 et 42, ci-après désigné par « couple de référence ».

A cet effet, un test est mis en oeuvre pour savoir si le couple de mesures (R,C) reste compris dans un pavé centré sur le couple de référence pendant un nombre de cycles moteur prédéterminé $\Delta t$, ou en variante une durée prédéterminée. Si le résultat de ce test est négatif, l'étape 68 boucle alors sur l'étape 64.

Sinon, le couple de référence correspond à un point stable de fonctionnement du moteur pour lequel la mise à jour de la valeur correspondante de la cartographie des moyens 42 formant cartographie de correction est déclenchée

$$\max\left(\frac{dP}{d\alpha}\right)_{nom}$$

dans une étape 70. La valeur corrective $\Delta U_{cor}$ est initialisée à 0 et la valeur nominale du niveau de bruit pour le couple de référence est chargée depuis les moyens 54 formant cartographie dans les moyens 52 d'optimisation.

Un compteur de cycles cylindres est alors initialisé en 72 à zéro et un test est mis en oeuvre en 74 pour savoir si la valeur de ce compteur est supérieure à un nombre N prédéterminé de cycles de calcul.

Si le résultat de ce test est négatif, les moyens 50 calculent et mémorisent en 76 un indice du bruit de combustion selon la relation (1).

Dans une étape 78 suivante, les moyens 48 testent si le point de fonctionnement du moteur est toujours stable autour du couple de référence, c'est-à-dire si les mesures du régime R et du couple C demandé sont dans le pavé prédéterminé autour du couple de référence.

Si cela n'est pas le cas, l'étape 78 boucle sur l'étape 64. Sinon, l'étape 78 se poursuit par une étape 80 qui incrémente le compteur de cycle d'une valeur de 1 lorsque le cycle moteur courant est terminé et qui boucle sur l'étape 74.

Si le test sur la valeur du compteur de cycles mis en oeuvre par l'étape 74 est positif, une étape 82 de calcul de la moyenne des niveaux de bruits calculés en 76 est mise en oeuvre par les moyens 50 de calcul et cette moyenne est délivrée aux moyens 52 d'optimisation.

De manière avantageuse, la formation de la moyenne des niveaux de bruit calculés selon la relation (1) permet de rejeter des dispersions dans le fonctionnement des cylindres comme des dispersions coup à coup et permet donc de fiabiliser l'optimisation du bruit de combustion mise en oeuvre par le système selon l'invention.

En variante, le niveau de bruit de combustion n'est pas moyenné, ce qui correspond à N=1.

En variante, afin de minimiser le temps de mise à jour des moyens 42, le fonctionnement du système ne comprend pas les étapes 66 et 78 de test sur la stabilité du point de fonctionnement du moteur, ou en variante la durée $\Delta T$ est réduite et correspond à un nombre réduit de cycles, par exemple égal à 5.

Dans une étape 84 suivante, les moyens 52 d'optimisation testent si le niveau de bruit calculé dans l'étape 82 satisfait à la relation (4).

Si le résultat de ce test est positif, les moyens 52 d'optimisation mettent à jour en 86 les moyens 42 formant cartographie en ajoutant à la valeur de la cartographie de ceux-ci la valeur corrective $\Delta U_{cor}$ courante puis l'étape 86 boucle sur l'étape 64.

Si le résultat de ce test est négatif, une étape 88 est mise en oeuvre par les moyens 52 qui testent si l'évolution du niveau de bruit calculé en 82 est monotone d'un cycle de calcul à l'autre.

Si l'évolution est monotone, c'est-à-dire décroissante, un test est mis en oeuvre en 90 pour savoir si le niveau de bruit calculé en 82 satisfait la relation

$$\max\left(\frac{dP}{d\alpha}\right)_{nom} - T_{min} > nbc \; .$$

Dans un mode de réalisation préféré de l'invention, la recherche de la valeur corrective $\Delta U_{cor}$ est effectuée sur une connaissance a priori de l'évolution du niveau de bruit de combustion en fonction des variations des pourcentages d'ouverture des vannes 18, 22, c'est-à-dire en fonction des variations du débit DEGR et de la température TEGR des gaz recirculés en entrée du moteur.

On sait qu'augmenter le débit EGR, c'est-à-dire augmenter le pourcentage d'ouverture de la vanne EGR 18, a pour effet de diminuer le bruit de combustion et donc le niveau de bruit de combustion, et vice-versa.

De même on sait qu'augmenter la température EGR, c'est-à-dire augmenter le pourcentage d'ouverture de la vanne 22 du bypass 20, a pour effet d'augmenter le bruit de combustion et donc le niveau de bruit de combustion, et vice-versa.

Si le résultat du test de l'étape 90 est positif, la valeur corrective $\Delta U_{cor}$ est modifiée, et mémorisée dans les moyens 52, dans une étape 92 en diminuant le pourcentage d'ouverture de la vanne EGR 18 d'un premier incrément prédéterminé et en augmentant le pourcentage d'ouverture de la vanne 22 d'un second pas d'incrément prédéterminé.

Si le résultat de ce test est négatif, ce qui signifie que le niveau de bruit de combustion satisfait la relation

$$nbc > \max\left(\frac{dP}{d\alpha}\right)_{nom} + T_{max} \; ,$$

la valeur corrective $\Delta U_{cor}$ est modifiée et mémorisée dans les moyens 52, dans une étape 94 en augmentant le pourcentage d'ouverture de la vanne EGR 18 du premier pas d'incrément prédéterminé et en diminuant le pourcentage d'ouverture de la vanne 22 du second pas d'incrément prédéterminé.

Les étapes 92 et 94 bouclent alors sur l'étape 72 pour un nouveau cycle de calcul du niveau de bruit de combustion.

Si le résultat du test sur la monotonie du niveau de bruit mis en oeuvre lors de l'étape 88 est négatif, c'est-à-dire qu'il n'a pas été possible de trouver des réglage des pourcentages d'ouverture de la vanne EGR 18 et de la vanne 22 du bypass 20 satisfaisant la relation (4) pour le couple de référence, un test est mis en oeuvre dans une étape 96 pour savoir s'il existe une valeur corrective $\Delta U_{cor}$ déterminée lors des étapes 92 et 94 qui minimise le niveau de bruit

$$nbc < \max\left(\frac{dP}{d\alpha}\right)_{nom} + T_{max}$$

de combustion tout en assurant que la relation $\qquad$ est satisfaite, ce qui correspond à la minimisation du bruit de combustion selon la seconde stratégie de recherche.

Si une telle valeur corrective a été déterminée, les moyens 52 d'optimisation mettent à jour en 98 les moyens 42 formant cartographie en ajoutant à la valeur courante des moyens 42 cette valeur corrective $\Delta U_{cor}$ et l'étape 98 boucle sur l'étape 64.

Sinon, un message d'erreur est généré en 100 pour signifier que le bruit de combustion pour le couple de référence considéré n'a pas pu être minimisé de manière satisfaisante et l'étape 100 boucle sur l'étape 64.

Il a été décrit un mode de réalisation particulier de l'invention. D'autres modes de réalisation sont possibles.

En variante, d'autres niveaux de bruit de combustion peuvent être utilisés. Par exemple, si le moteur 10 est un moteur Diesel dont les cylindres sont alimentés selon au moins une injection pilote et une injection principale, le niveau de bruit de combustion peut être calculé selon la relation :

$$nbc = \max_{i}\left(\beta + \delta \times \max\left(\max_{\alpha_{ip} \in A_{ip}} \frac{dP_i}{d\alpha_{ip}}, \max_{\alpha_{iprn} \in A_{ipm}} \frac{dP_i}{d\alpha_{iprn}}\right)\right) \quad (2)$$

où $\beta$ et $\delta$ sont des paramètres prédéterminés, $\alpha_{ip}$ est un angle vilebrequin de la phase à injection pilote $A_{ip}$ du cycle du ième cylindre et $\alpha_{ipm}$ est un angle vilebrequin de la phase à injection principale $A_{iprn}$ du cycle du ième cylindre.

En variante, seule la vanne EGR 18, c'est-à-dire la vanne de réglage du débit des gaz recirculés en entrée du moteur, est utilisée comme organe de commande du bruit de combustion, et dans ce cas, seule la modification du pourcentage d'ouverture de cette vanne est réalisée lors de la minimisation du niveau de bruit de combustion.

En variante, seule la vanne 22 du bypass 20, c'est-à-dire la vanne de réglage de la température des gaz recirculés en entrée du moteur, est utilisée comme organe de commande du bruit de combustion, et dans ce cas, seule la modification du pourcentage d'ouverture de cette vanne est réalisée lors de la minimisation du niveau de bruit de combustion.

De même, la recherche de la valeur corrective permettant de satisfaire la relation (4) peut être réalisée différemment, par exemple en mettant en oeuvre des algorithmes numériques du type Newton qui approximent le gradient du niveau de bruit de combustion par la relation

$$\left(\frac{nbc(k) - nbc(k-1)}{\%DEGR(k) - \%DEGR(k-1)} \quad \frac{nbc(k) - nbc(k-1)}{\%TEGR(k) - \%TEGR(k-1)}\right)^{T},$$

où k est le nombre du cycle courant de recherche, k-1 le nombre du cycle précédent, %DEGR est le pourcentage d'ouverture de la vanne EGR 18 et %TEGR est le pourcentage d'ouverture de la vanne 22 du bypass 20, une direction initiale de recherche étant par exemple déterminée comme cela a été décrit précédemment en relation avec l'organigramme de la figure 3.

## Revendications

**1.** Système de contrôle du fonctionnement d'un moteur Diesel (10) de véhicule automobile équipé de moyens (28) d'alimentation en carburant des cylindres de celui-ci selon des injections multiples et de moyens (12) de recirculation des gaz d'échappement en entrée du moteur, ledit système comprenant une chaîne (30) d'acquisition de la pression dans au moins un cylindre du moteur et de l'angle moteur, des moyens (32) de commande des moyens (12) de recirculation et des moyens (50) de détermination d'un niveau de bruit de combustion dans le moteur (10), les moyens (50) de détermination du niveau de bruit de combustion dans le moteur étant adaptés pour déterminer celui-ci en fonction du maximum des augmentations du gradient de pression dans le au moins un cylindre provoquées par les injections multiples de carburant dans celui-ci, et les moyens (32) de commande étant adaptés pour piloter les moyens (12) de recirculation en fonction du niveau de bruit déterminé de combustion, **caractérisé en ce que** les moyens (50) de détermination sont propres à déterminer le niveau de bruit de combustion dans le moteur en fonction d'un niveau de bruit de combustion dans le au moins un cylindre selon la relation :

$$nbc_i = \max_{j \in \{1,2...,N\}} \left( \max_{\alpha_i \in B_j} \left( \frac{dP_i}{d\alpha_i} \right) - \frac{dP_i}{d\alpha_i}(ini_j) \right)$$

où nbci est le niveau de bruit de combustion dans le au moins un cylindre, N est le nombre d'injections multiples de carburant dans le cylindre, $B_j$ est une plage prédéterminée d'angles vilebrequin du cylindrecomprenant le maximum du gradient de pression provoqué par la jème injection de carburant dans le cylindre, et $\frac{dP_i}{d\alpha_i}(ini_j)$ est la valeur du gradient de pression dans le au moins un cylindre à l'angle vilebrequin de début de combustion du carburant de la jème injection.

2.  Système selon la revendication 1, **caractérisé en ce que** les moyens (50) de détermination sont propres à déterminer le niveau de bruit de combustion dans le moteur comme étant le maximum des niveaux de bruit de combustion dans le au moins un cylindre.

3.  Système selon la revendication 1, **caractérisé en ce que** les moyens (50) de détermination sont propres à déterminer le niveau de bruit de combustion dans le moteur comme étant une combinaison linéaire des niveaux de bruit de combustion dans le au moins un cylindre.

4.  Système selon la revendication 1, **caractérisé en ce que** les moyens (50) de détermination sont propres à déterminer le niveau de bruit de combustion dans le moteur comme étant la moyenne des niveaux de bruit de combustion dans le au moins un cylindre.

5.  Système selon l'une quelconque des revendications précédentes, **caractérisé en ce que** les moyens (12) de recirculation comprennent des moyens (18) de réglage du débit des gaz d'échappement recirculés en entrée du moteur, et **en ce que** les moyens (32) de commande comprennent des moyens (40, 42, 44) de pilotage des moyens de réglage du débit en fonction du niveau de bruit de combustion déterminé.

6.  Système selon selon l'une quelconque des revendications précédentes, **caractérisé en ce que** les moyens de recirculation comprennent des moyens de réglage de la température des gaz d'échappement recirculés en entrée du moteur, et **en ce que** les moyens de commande comprennent des moyens (40, 42, 44) de pilotage des moyens de réglage de la température en fonction du niveau de bruit de combustion déterminé.

7.  Système selon l'une quelconque des revendications précédentes, **caractérisé en ce que** les moyens (30) de commande comprennent des moyens (54) formant cartographie de valeurs nominales prédéterminées du niveau de bruit de combustion en fonction de points de fonctionnement prédéterminés du moteur, et des moyens (40, 42, 44) de pilotage adaptés pour délivrer aux moyens (12) de recirculation un signal de régulation propre à réguler, pour un point de fonctionnement du moteur de la cartographie, le niveau de bruit de combustion sur la valeur du niveau de bruit de combustion de la cartographie associée à ce point de fonctionnement.

8.  Système selon la revendication 7, **caractérisé en ce que** les moyens (32) de commande comprennent des moyens (46) de correction des moyens (40, 42, 44) de pilotage adaptés pour déterminer le signal de régulation, et corriger les moyens (40, 42, 44) de pilotage en fonction de celui-ci, à partir d'une première stratégie selon les relations :

$$U^* = \underset{U \in Q, \alpha \in A}{\arg\min} (nbc(U))$$

sous la contrainte :

$$\max\left(\frac{dP}{d\alpha}\right)_{nom} - T_{min} \le nbc(U) \le \max\left(\frac{dP}{d\alpha}\right)_{nom} + T_{max}$$

.

où U* est le signal de régulation, U est un vecteur de paramètres de fonctionnement des moyens de recirculation, Q est un ensemble prédéterminé de valeurs pour les paramètres U, $\max\left(\dfrac{dP}{d\alpha}\right)_{nom}$ est une valeur nominale du niveau de bruit de combustion, et $T_{min}$ et $T_{max}$ sont des tolérances prédéterminées positives.

9. Système selon la revendication 8, **caractérisé en ce que** les moyens (46) de correction sont adaptés, lorsque la première stratégie échoue, pour déterminer le signal de régulation, et corriger les moyens (40, 42, 44) de pilotage en fonction de celui-ci, à partir d'une seconde stratégie selon les relations :

$$U^* = \arg\min_{U \in Q, \alpha \in A}\left(\left|nbc(U) - \max\left(\frac{dP}{d\alpha}\right)_{nom}\right|\right)$$

sous la contrainte :

$$nbc(U) \le \max\left(\frac{dP}{d\alpha}\right)_{nom}$$

10. Système selon la revendication 8 ou 9, **caractérisé en ce que** l'ensemble Q est un ensemble prédéterminé de valeurs des paramètres de fonctionnement des moyens de recirculation satisfaisant à des contraintes prédéterminées sur l'émission de polluant par le moteur.

11. Système selon l'une quelconque des revendications précédentes, **caractérisé en ce que** le moteur est du type à homogénéisation partielle ou totale du mélange carburant-gaz admis dans les cylindres du moteur.

## Patentansprüche

1. Regelvorrichtung des Betriebs einer DieselBrennkraftmaschine (10) eines Kraftfahrzeugs, das mit Mitteln (28) zur Versorgung mit Kraftstoff seiner Zylinder gemäß mehrfachen Einspritzungen und Mitteln (12) zur Rückführung der Abgase zum Einlass des Motors ausgestattet ist, wobei das System eine Erfassungskette (30) des Drucks in mindestens einem Zylinder des Motors, und des Motorwinkels, Mittel (32) zum Steuern der Rückführungsmittel (12) und Mittel (50) zum Bestimmen eines Verbrennungsgeräuschpegels in den Motor (10) umfasst, wobei die Mittel (50) zum Bestimmen des Verbrennungsgeräuschpegels in dem Motor angepasst sind, um diesen in Abhängigkeit von dem Maximum der Erhöhungen des Druckgefälles in dem mindestens einen Zylinder zu bestimmen, die durch die mehrfachen Kraftstoffeinspritzungen in diesen verursacht werden, und die Steuermittel (32) angepasst sind, um die Rückführungsmittel (12) in Abhängigkeit von dem bestimmten Verbrennungsgeräuschpegel zu steuern, **dadurch gekennzeichnet, dass** die Mittel (50) zum Bestimmen geeignet sind, den Verbrennungsgeräuschpegel in dem Motor in Abhängigkeit von einem Verbrennungsgeräuschpegel in dem mindestens einen Zylinder gemäß der folgenden Beziehung zu bestimmen:

$$nbc_i = \max_{j \in \{1,2...,N\}}\left(\max_{\alpha_i \in B_j}\left(\frac{dP_i}{d\alpha_i}\right) - \frac{dP_i}{d\alpha_i}\left(ini_j\right)\right)$$

,

wobei $nbc_i$ der Verbrennungsgeräuschpegel in dem mindestens einen Zylinder ist, N die Anzahl mehrfacher Kraftstoffeinspritzungen in den Zylinder ist, $B_j$ ein vorbestimmter Bereich von Kurbelwinkeln des Zylinders ist, der das Maximum des Druckgefälles umfasst, das von der j-ten Kraftstoffeinspritzung in den Zylinder verursacht wird, und

$$\frac{dP_i}{d\alpha_i}\left(ini_j\right)$$

der Wert des Druckgefälles in dem mindestens einen Zylinder beim Kurbelwinkel des Verbrennungsbeginns des Kraftstoffs der j-ten Einspritzung ist.

2. System nach Anspruch 1, **dadurch gekennzeichnet, dass** die Mittel (50) zum Bestimmen geeignet sind, den Verbrennungsgeräuschpegel in dem Motor als das Maximum der Verbrennungsgeräuschpegel in dem mindestens einen Zylinder zu bestimmen.

3. System nach Anspruch 1, **dadurch gekennzeichnet, dass** die Mittel (50) zum Bestimmen geeignet sind, den Verbrennungsgeräuschpegel in dem Motor als eine lineare Kombination der Verbrennungsgeräuschpegel in dem mindestens einen Zylinder zu bestimmen.

4. System nach Anspruch 1, **dadurch gekennzeichnet, dass** die Mittel (50) zum Bestimmen geeignet sind, den Verbrennungsgeräuschpegel in dem Motor als das Mittel der Verbrennungsgeräuschpegel in dem mindestens einen Zylinder zu bestimmen.

5. System nach einem der vorstehenden Ansprüche, **dadurch gekennzeichnet, dass** die Rückführungsmittel (12) Mittel (18) zum Regeln des Durchsatzes der Abgase, die zum Einlass des Motors rückgeführt werden, umfassen, und dass die Steuermittel (32) Mittel (40, 42, 44) zum Steuern der Regelmittel des Durchsatzes in Abhängigkeit von dem bestimmten Geräuschpegel umfassen.

6. System nach einem der vorstehenden Ansprüche, **dadurch gekennzeichnet, dass** die Rückführungsmittel Mittel zum Regeln der Temperatur der Abgase, die zum Einlass des Motors zurückgeführt werden, umfassen, und dass die Steuermittel Mittel (40, 42, 44) zum Steuern der Mittel zum Regeln der Temperatur in Abhängigkeit von dem bestimmten Verbrennungsgeräuschpegel umfassen.

7. System nach einem der vorstehenden Ansprüche, **dadurch gekennzeichnet, dass** die Befehlsmittel (30) Mittel (54) umfassen, die eine Kartographie vorbestimmter Nennwerte des Verbrennungsgeräuschpegels in Abhängigkeit von vorbestimmten Betriebspunkten des Motors bilden, und Steuermittel (40, 42, 44), die angepasst sind, um zu den Rückführungsmitteln (12) ein Regelsignal zu liefern, das geeignet ist, um für einen Betriebspunkt des Motors der Kartographie den Verbrennungsgeräuschpegel auf den Wert des Verbrennungsgeräuschpegels der Kartographie, der mit diesem Betriebspunkt assoziiert ist, zu regeln.

8. System nach Anspruch 7, **dadurch gekennzeichnet, dass** die Befehlsmittel (32) Mittel (46) zum Korrigieren der Steuermittel (40, 42, 44) umfassen, die angepasst sind, um das Regelsignal zu bestimmen und die Steuermittel (40, 42, 44) in Abhängigkeit von diesem ausgehend von einer ersten Strategie gemäß den Beziehungen zu korrigieren:

$$U^* = \arg\min_{U\in Q, \alpha\in A}\left(nbc(U)\right)$$

unter der Auflage:

$$\max\left(\frac{dP}{d\alpha}\right)_{nom} - T_{min} \leq nbc(U) \leq \max\left(\frac{dP}{d\alpha}\right)_{nom} + T_{max} \quad,$$

wobei U* das Regelsignal ist, U ein Vektor von Betriebsparametern der Rückführungsmittel ist, Q eine vorbestimmte

$$\max\left(\frac{dP}{d\alpha}\right)_{nom}$$

Einheit von Werten für die Parameter U ist, ein Nennwert des Verbrennungsgeräuschpegels ist, und $T_{min}$ und $T_{max}$ vorbestimmte positive Toleranzen sind.

**9.** System nach Anspruch 8, **dadurch gekennzeichnet, dass** die Korrekturmittel (46) angepasst sind, um, wenn die erste Strategie scheitert, das Regelsignal zu bestimmen und die Steuermittel (40, 42, 44) in Abhängigkeit von diesem zu korrigieren, ausgehend von einer zweiten Strategie gemäß den Beziehungen:

$$U^* = \arg\min_{U \in Q, \alpha \in A}\left(\left|nbc(U) - \max\left(\frac{dP}{d\alpha}\right)_{nom}\right|\right)$$

unter der Auflage:

$$nbc(U) \le \max\left(\frac{dP}{d\alpha}\right)_{nom}$$

**10.** System nach Anspruch 8 oder 9, **dadurch gekennzeichnet, dass** die Einheit Q eine vorbestimmte Einheit von Werten der Betriebsparameter der Rückführungsmittel ist, die vorbestimmte Auflagen hinsichtlich der Schadstoffemission durch den Motor erfüllen.

**11.** System nach einem der vorstehenden Ansprüche, **dadurch gekennzeichnet, dass** der Motor vom Typ mit teilweiser oder vollständiger Homogenisierung des Kraftstoff-Gasgemisches, das in die Zylinder des Motors eingelassen wird, ist.

**Claims**

**1.** A control system for a motor vehicle diesel engine (10) equipped with fuel supply means (28) of the cylinders thereof according to multiple injections, and exhaust gas recirculation means (12) at the inlet of the engine, said system including an acquisition chain (30) of the pressure in at least one cylinder of the engine and of the engine angle, control means (32) of the recirculation means (12) and means (50) for determining a level of combustion noise in the engine (10), the means (50) for determining the level of combustion noise in the engine being adapted to determine the latter as a function of the maximum of the increases in pressure gradient in the at least one cylinder caused by the multiple injections of fuel therein, and the control means (32) being adapted to control the recirculation means (12) as a function of the determined level of combustion noise, **characterized in that** the determining means (50) are suitable to determine the level of combustion noise in the engine as a function of a level of combustion noise in the at least one cylinder according to the equation:

$$nbc_i = \max_{j \in \{1,2...,N\}}\left(\max_{\alpha_i \in B_j}\left(\frac{dP_i}{d\alpha_i}\right) - \frac{dP_i}{d\alpha_i}(ini_j)\right)$$

in which $nbc_i$ is the level of combustion noise in the at least one cylinder, N is the number of multiple injections of fuel in the cylinder, $B_j$ is a predetermined range of crankshaft angles of the cylinder including the maximum of the pressure gradient caused by the jth injection of fuel in the cylinder, and $\frac{dP_i}{d\alpha_i}(ini_j)$ is the value of the pressure gradient in the at least one cylinder at the crankshaft angle at the start of combustion of the fuel of the jth injection.

2. The system according to Claim 1, **characterized in that** the determining means (50) are suitable for determining the level of combustion noise in the engine as being the maximum of the levels of combustion noise in the at least one cylinder.

3. The system according to Claim 1, **characterized in that** the determining means (50) are suitable for determining the level of combustion noise in the engine as being a linear combination of the levels of combustion noise in the at least one cylinder.

4. The system according to Claim 1, **characterized in that** the determining means (50) are suitable for determining the level of combustion noise in the engine as being the average of the levels of combustion noise in the at least one cylinder.

5. The system according to any one of the preceding claims, **characterized in that** the recirculation means (12) include means (18) for regulating the flow of the exhaust gases recirculated at the inlet of the engine, and **in that** the control means (32) include means (40, 42, 44) for controlling the regulating means of the flow as a function of the determined level of combustion noise.

6. The system according to any one of the preceding claims, **characterized in that** the recirculation means include means for regulating the temperature of the exhaust gases recirculated at the inlet of the engine, and **in that** the control means include means (40, 42, 44) for controlling the means for regulating the temperature as a function of the determined level of combustion noise.

7. The system according to any one of the preceding claims, **characterized in that** the control means (30) include means (54) forming a mapping of predetermined nominal values of the level of combustion noise as a function of determined operating points of the engine, and controlling means (40, 42, 44) adapted to deliver to the recirculation means (12) a regulation signal suitable for regulating, for an operating point of the engine of the mapping, the level of combustion noise over the value of the level of combustion noise of the mapping associated with this operating point.

8. The system according to Claim 7, **characterized in that** the control means (32) include means (46) for correction of the controlling means (40, 42, 44) adapted to determine the regulation signal, and to correct the controlling means (40, 42, 44) as a function thereof, from a first strategy according to the equations:

$$U^* = \underset{U \in Q, \, \alpha \in A}{\arg\min} \left( nbc(U) \right)$$

under the constraint:

$$\max\left(\frac{dP}{d\alpha}\right)_{nom} - T_{min} \leq nbc(U) \leq \max\left(\frac{dP}{d\alpha}\right)_{nom} + T_{max}$$

where U* is the regulation signal, U is a vector of operating parameters of the recirculation means, Q is a predeter-

$$\max\left(\frac{dP}{d\alpha}\right)_{nom}$$

mined set of values for the parameters U, $\qquad$ is a nominal value of the level of combustion noise and $T_{min}$ and $T_{max}$ are positive predetermined tolerances.

9. The system according to Claim 8, **characterized in that** the correction means (46) are adapted, when the first strategy fails, to determine the regulation signal, and to correct the controlling means (40, 42, 44) as a function thereof, from a second strategy according to the equations:

$$U^* = \underset{U \in Q, \alpha \in A}{\arg\min} \left( \left| nbc(U) - \max\left( \frac{dP}{d\alpha} \right)_{nom} \right| \right)$$

under the constraint:

$$nbc(U) \leq \max\left( \frac{dP}{d\alpha} \right)_{nom}$$

**10.** The system according to Claim 8 or 9, **characterized in that** the set Q is a predetermined set of values of the operating parameters of the recirculation means satisfying predetermined constraints on the emission of pollutant by the engine.

**11.** The system according to any one of the preceding claims, **characterized in that** the engine is of the type with partial or total homogenization of the fuel-gas mixture admitted in the cylinders of the engine.

FIG.1

EP 1 760 295 B1

FIG.2

FIG.3

FIG.4

19

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2835881

- AT 6753U1 A